# EUROPEAN PATENT SPECIFICATION

(11) **EP 0 420 989 B1**
(45) Date of publication and mention of the grant of the patent: **01.06.1994**
(21) Application number: 90905639.2
(22) Date of filing: 28.03.1990
(51) Int. Cl.: C03B 37/014, C03B 20/00

(54) **SINTERING FURNACE FOR PRODUCING QUARTZ BASE MATERIAL**
SINTEROFEN ZUR HERSTELLUNG VON QUARZ-BASISMATERIAL
FOUR DE FRITTAGE POUR LA PRODUCTION DE MATIERES A BASE DE QUARTZ

(30) Priority: 30.03.1989 JP 76706/89
(43) Date of publication of application: 10.04.1991
(73) Proprietor: SUMITOMO ELECTRIC INDUSTRIES, LTD., Osaka-shi, Osaka 541 (JP)
(72) Inventor: TSUCHIYA, I. Yokohama Works-S. Elec. Ind. Ltd., Kanagawa 244 (JP); SAITO, M. Yokohama Works-Sumitomo Elec. Ind. Ltd., Kanagawa 244 (JP); ISHIKAWA, S. Yokohama Works-S. Elec. Ind. Ltd., Kanagawa 244 (JP); HABASAKI, T. Yokohama Works-S. Elec. Ind. Ltd., Kanagawa 244 (JP)
(74) Representative: Cross, Rupert Edward Blount
(86) International application number: PCT/JP90/00418
(87) International publication number: WO 90/11974

(56) References cited:
- No further relevant documents have been disclosed.

## Description

This invention relates to a sintering furnace for carrying out at least one of dehydration, fluorine-addition and sintering of a porous quartz soot preform prepared by a flame hydrolysis method such as a VAD method or an OVD method.

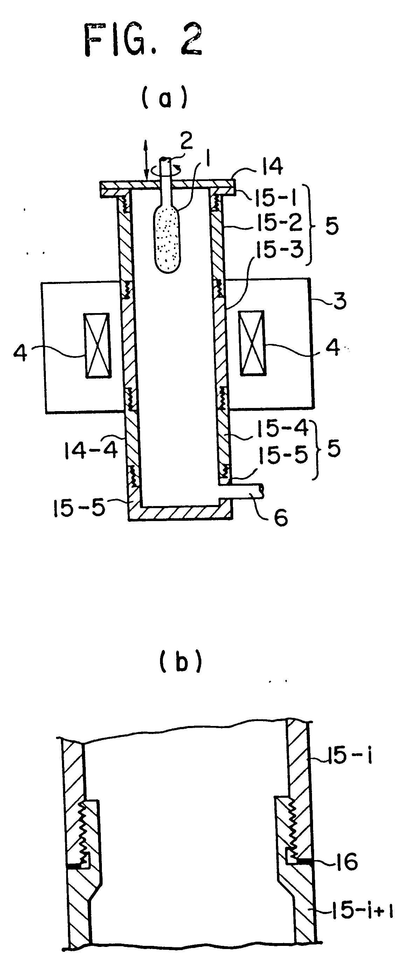

As a furnace muffle material of a furnace for the production of a quartz preform such as a quartz preform for optical fibers, for example, there can be used high purity carbon in such a form that the inner wall and/or outer wall is coated with a gas-impermeable material, shown in Fig. 2, as disclosed in JP-A-61201634.

In Fig. 2, a soot preform 1 is fitted to connection rod 2 rotatable and vertically movable in an electric furnace 3 provided with a heater of e.g. carbon. 15 designates a furnace muffle of carbon inserted in the furnace 3. The surface of the tube is coated with SiC and further oxidized. 6 designates a gas feed port provided at the lower end of the furnace muffle 15 so as to feed a gas such as He, Cl₂, SiF₄, etc. into the furnace muffle 15 of the Sic-coated carbon. The coating of SiC on the surface of the furnace muffle 15 of carbon is carried out by an ordinary CVD method or plasma CVD method using SiCl₄, SiH₄, SiHCl₄, etc. as a raw material of Si and CH₄ as a raw material of C. Generally, the vapor deposition temperature is 1000-1600 °C in the case of the ordinary CVD method and 700 to 1000 °C in the case of the plasma CVD method. The coating thickness of SiC is effectively at least 1 µm when using it under oxidized state. Furthermore, it is known that the furnace muffle of carbon is coated with surface-non-oxidized SiC or gas-impermeable carbon.

However, the above described technique has a problem that a furnace muffle of SiC-coated high purity carbon, which is available at the present time, has a maximum length of only about 900 mm and when that having a length more than this is required, a plurality of the tubes are used by jointing. In the structure of the prior art as shown in Fig. 2 (a), however, there is a joint at a relatively high temperature part inside or outside the furnace except in relatively smallsized apparatus. Fig. 2 (b) is a partial cross-sectional view of such a joint part, in which separate upper and lower muffles 15-i and 15-i+l are respectively threaded, screwed and sealed through a carbon gasket.

However, the gas impermeable property of this structure is not complete to such as extent that measurement of the gas permeation using a furnace muffle with an outer diameter of 210mm gave 3.67 x 10⁻⁸m⁻³/min/Nm⁻²(0.36cc/min/mm.H₂O). As such a small amount of gas permeates through the furnace muffle so that O₂ or H₂O outside the furnace muffle enters the furnace muffle and a problem arises that when a preform for optical fibers sintered in such a furnace muffle is finally converted into an optical fiber, the average value of transmission loss of the optical fiber becomes slightly larger than prepared in the ordinary quartz muffle.

Since the furnace muffle of quartz has a problem in life that it meets with thermal deformation at a high temperature and with cracking when the temperature is raised once and then lowered to 600 °C or lower, resulting in increase of the cost, on the other hand, it has been required to develop a muffle formed of high purity carbon, capable of producing an optical fiber with the average loss substantially similar to the furnace muffle of quartz.

The present invention has been made under the situation and aims at providing a sintering furnace for producing a quartz preform, comprising a furnace muffle formed of high purity carbon coated with a gas-impermeable coating, which is suitable for obtaining an optical fiber with a longer life as well as less loss due to impurities and OH groups.

The present invention has been made, as a means for solving the above described problems, noticing improvement of a method of sealing a joint part of a furnace muffle of high purity carbon coated with a gas-impermeable film.

The present invention provides a sintering furnace for carrying out at least one of the steps of dehydration, fluorine addition and sintering of a quartz preform, comprising a muffle of high purity carbon, the inner wall and/or outer wall of which is coated with a gas-impermeable film, the muffle being of a cylindrical form with an axis in the longitudinal direction and divided into a plurality of parts in the longitudinal direction, characterised in that the divided parts each have butt parts finished flat at the upper and lower ends, the butt parts being sealed by a carbon gasket between them, said sintering furnace including thrusting means for applying a force to end parts the muffle in the direction of the longitudinal axis thereof to press the butt parts together such that the force is uniformly applied over the circumferance of the muffle; said thrusting means including means to maintain said axial force within a set range such that even when the muffle undergoes thermal expansion the axial force can be maintained within the set range.

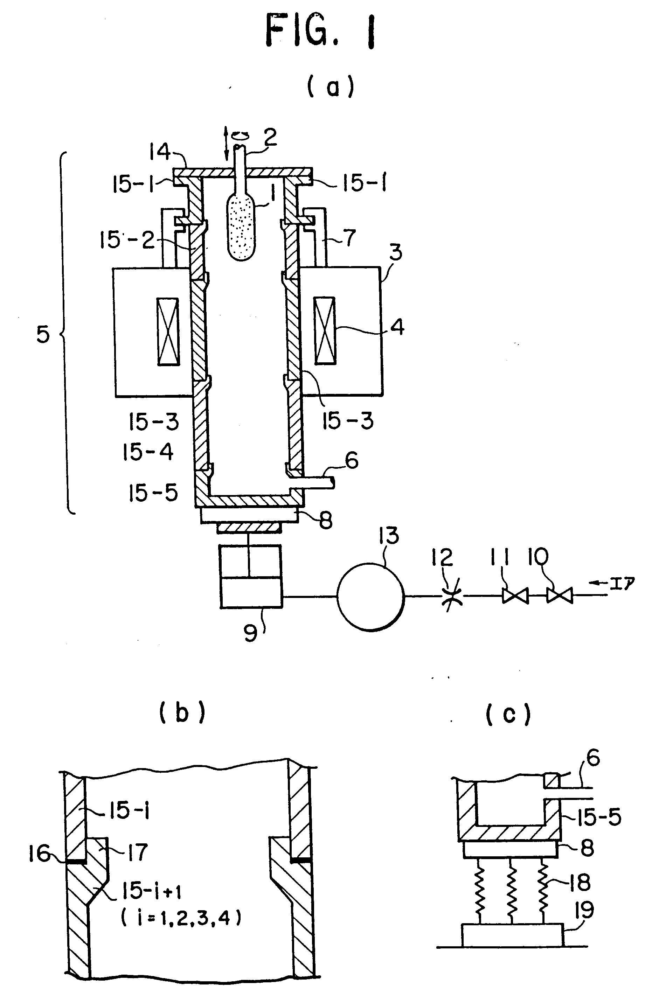

Fig. 1(a) to (c) are schematic views to illustrate the sintering furnace according to one embodiment of the present invention, (a) being a schematic view to illustrate an example of the present invention, (b) being a partly enlarged view of (a) and (c) being a partly schematic view to illustrate another example of the present invention. Fig. 2(a) and (b) are schematic views illustrating the structure of the prior art, (b) being a partly enlarged view of (a).

In the present invention, the above described thrusting means is capable of pressing while maintaining the thrusting force in a constant range even if the muffle thermally expands with change of the temperature.

In one embodiment the thrusting means is arranged to fix one end of the muffle and the other end thereof is pressed by an air cylinder having a stroke capable of responding to the whole range of change due to thermal expansion of the muffle, the air cylinder being provided with an air feed pipe, in which an air reservoir is inserted having a sufficient volume to respond to change of the inner volume of the cylinder with change of the position of the air cylinder during thermal expansion of the muffle. In another embodiment the thrusting means is arranged to fix one end of the muffle and the other end thereof is pressed by a spring designed so that the thrusting force has a stroke capable of responding to the whole reange of change due to thermal expansion of the muffle and during the same time the thrusting force is in a predetermined range.

Preferably, the sintering furnace of the present invention is a hollow zone furnace in which the above described muffle penetrates through the hollow zone and outside which the thrusting means is provided, or a soaking furnace that can keep a soot preform in the uniformly heating space, in which at least one of the above described muffle penetrates through a heating zone or furnace body and which has the above described thrusting means where the muffle penetrates through the soaking furnace or at the low temperature part of the soaking furnace.

The inventors have made various studies to achieve the above described object and consequently, have found that the reason why complete sealing cannot be obtained by the screw system of the prior art is that (1) the parallel degree of the butt surfaces through a gasket is not sufficient and the gasket is not uniformly fastened and (2) a sufficient sealing force cannot be given to the gasket.

As a result of further studies based on the above described knowledge, it is found that leakage of a gas can completely be prevented by finishing the upper and lower ends of the divided parts to be flat and uniformly clamping the whole circumference through the gasket. However, this method cannot be used when the divided part is at a temperature of 500 °C or higher, since copper, SUS or aluminum alloys, commonly used, cannot be used. Thus, in one embodiment of the present invention, one end of the divided muffle at a temperature of lower than 500 °C is fixed and the other end thereof at a temperature of 500 °C or lower is pressed to the one end in the axial direction of the muffle in such a manner that the force is uniformly applied to the circumference thereof.

Furthermore, the thrusting force can be maintained in a constant range even if the muffle is subjected to thermal expansion with change of the temperature. Such a mechanism can be realized, for example, by an air cylinder or spring, which will now be illustrated by a preferable embodiment with the accompanying drawing:

Referring to Fig. 1 and Fig. 2, the sintering furnace for producing a quartz preform comprises a porous glass soot preform 1, a connection rod 2, an electric furnace 3, a heater 4, a muffle 5, a gas feed port 6, a support 8, an air cylinder 9, a regulator 10, a valve 11, a speed controller 12, an air reservoir 13, an upper lid 14 of the muffle, a cylindrical part 15 of the muffle, parts 15-1, 15-2, 15-3, 15-4, and 15-5 for forming the cylindrical part of the muffle, a carbon gasket 16, a positioning structure 17, a spring 18 and a plate 19.

Fig. 1 (a) shows one embodiment of the sintering furnace for producing a quartz preform, in which the soot preform 1 is fitted to the connection rod. 3 designates the electric furnace provided with the heater 4. The muffle 5 of carbon is inserted in the furnace 3 and consists of the upper lid 14 and cylindrical part 15, the surface of which is coated with SiC. The cylindrical part 15 of the muffle is divided into 5 parts of 15-1, 15-2, 15-3, 15-4 and 15-5 from above. 6 designates the gas feed inlet for feeding a gas to the above described furnace muffle 5. The cylindrical part 15 of the muffle is fixed at the-flange part 15-1 by a support 7 and the part 15-5 is pressed through the plate 8 and air cylinder 9. The plate 8 and the air cylinder 9 are point-contacted so that the thrusting force of the core tube 5, in the axial direction, is uniform over the circumference thereof. The air cylinder 9 is provided with an air pressure through the regulator 10, valve 11, speed controller 12 and air reservoir 13.

Fig. 1 (b) is a partly enlarged view of the joint part of Fig. 1 (a), in which the upper end of 15-i and the lower end of 15-i+l (i = 1 to 4) are finished to be flat and hold the carbon gasket 16 between them, the carbon gasket 16 being fixed by the positioning structure 17 worked in 15-i+l. The upper and lower divided parts are engaged by the positioning structure 17.

Fig. 1 (c) shows a means for pressing by the spring 18 in place of the air cylinder 8, in which the plate 8 and plate 19 are pressed each other through a plurality of springs 18 so that the thrusting force be uniform on the circumference thereof.

It is found by experiments that the thrusting force of the joint parts should be at least 1961.4N (200 kgf) so as to obtain a sufficient sealing in the case of a muffle having an outer diameter of 210 mm and a thickness of 8 mm. However, this value, depending upon the kind and area of a gasket the finishing precision of the butt surface and the allowable leak amount, cannot be determined unconditionally. On the other hand, the upper limit of the thrusting force is obtained by the strength determined by the structure of the muffle and the carbon material. In the apparatus of Fig. 1 (a), this value is determined by the bending stress added to the fixed flange part and the designing is carried out considering the safety factor, so that the thrusting force of at most 4903.5N (500 kgf) is applied. When the furnace body 3 has a whole length of 800 mm in the longitudinal direction, the thermal expansion of the muffle 15 heated from room temperature to 1700 °C is about 10 mm and this thermal expansion can be absorbed if there is a stroke of at least 15 mm. If the thrusting means is not provided with the means for absorbing the thermal expansion, thermal stress extremely exceeding the upper limit of the thrusting force is added to the muffle and the muffle or thrusting means is broken.

In order to satisfy the above described conditions, an air cylinder 9 of 100 mm is cylindrical diameter is used in the apparatus of Fig. 1(a) and an air pressure of 4.9 x 10⁵N/m²(5 kgf/ cm²) at normal temperature is applied to the cylinder. The air reservoir 13 has an inner volume of 1000 ml and is arranged to be sufficiently far from the furnace 3 so that when the furnace 3 is heated, no temperature change take place in the air reservoir 13. Since during the same time, the thrusting force of the cylinder 9 is about 3824.73N(390 kgf) and the air amount at a stroke of 15mm is about 1.2 x 16⁻⁴m³(120 cc) change of the thrusting force due to displacement of the cylinder 9 is at most 10 % or more and in practice, the stroke displacement is about 10 mm and the whole volume of the air amount, somewhat larger than the volume of the air reservoir, is only at most 10 %.

In the structure as shown in Fig. 1 (c), 5 springs having a spring constant of 196.14N(20 kgf/cm²) and a load length of 6 cm are used and fitted in such manner that the whole pressing means may shrink at normal temperature by 3 cm from the free length and has a pressing force of 2942.1N (300 kgf). In this case, the pressing force is 4413.15N (450 kgf) to 4903.5N (500 kgf) when the core tube extends by 15mm.

The present invention will now be illustrated in detail by the following examples.

### Example 1

Using the apparatus of Fig. 1 (a), a blank lid was tightly fastened to the muffle tube 15 in place of the upper lid 14 of the core tube, the blank and muffle being sealed by an o-ring, and N₂ gas was introduced thereinto until the inner pressure of muffle was 2942N/m² (300 mmH₂O). The furnace 3 was maintained at normal temperature. After allowing the system to stand for 20 minutes, it was found that the inner pressure of the core tube was not changed.

### Example 2

Using the apparatus of Fig. 1 (c), the procedure of Example 1 was repeated to find no change in the inner pressure after allowing the system to stand for 20 minutes.

### Comparative Example 1

Using the apparatus of screw-fastening type of the prior art, the procedure of Example 1 was repeated. The initial inner pressure of 2942N/m² (300 mmH₂O) was lowered to about 294.2N/m² (30 mmH₂O) after allowing to stand for 10 minutes. This pressure difference was considered to be due to leakage from the joint part.

### Example 3

Using the apparatus of Fig. 1 (a), the core tube was heated to 1650 °C in an atmosphere of He and SiF₄. As the coating of the muffle, there was used a gas-impermeable film of pyrolytic carbon. When a litmus paper was applied to the joint part outside the furnace to examine whether the discoloration took place or not, no color change was found. As to the gas in the furnace, the presence of HF gas was examined by means of a HF detecting tube at 200 °C and 1600 °C. In both the cases, the amount of HF gas was found to be less than the detection limit, which told that there was no leakage of the gas.

### Comparative Example 2

Using the apparatus of Fig. 2, the atmosphere in the muffle and the heating temperature were maintained similar to those of Example 3. When a litmus test paper was brought close to the joint part outside the furnace, it turned yellow soon after the start of flowing SiF₄. When the concentration of HF was measured by a HF detecting tube as to the gas in the furnace at 1200 °C, HF with a concentration of at least 10 ppm, exceeding the measurement limit of the HF detecting tube. These results showed that in the structure as shown in Fig. 2, there was found gas leakage from the muffle.

### Utility and Possibiliby on Commercial Scale

As illustrated above, when using the sintering furnace according to embodiments of the present invention, having a long muffle which cannot be formed as one body it is possible to prevent H₂O, O₂ and other impurities in the air from entering into the muffle from the outside as well as preventing corrosive gases and poisonous gases in the muffle from leaking to the outside. In the case of using gas-impermeable carbon as the core tube, there is no need of taking care of the thermal deformation and cracking when the temperature is lowered as is encountered in the ordinary quartz muffle. Furthermore, another advantage can be obtained that it can be expected to produce an optical fiber with an average value of the loss similar to when using the quartz muffle, because of the complete gas-tightness.

## Claims

1. A sintering furnace for carrying out at least one of the steps of dehydration, fluorine addition and sintering of a quartz preform, comprising a muffle (15) of high purity carbon, the inner wall and/or outer wall of which is coated with a gas-impermeable film, the muffle (15) being of a cylindrical form with an axis in the longitudinal direction and divided into a plurality of parts (15-1 through 15-5) in the longitudinal direction, characterised in that the divided parts (15-1 through 15-5) each have butt parts finished flat at the upper and lower ends, the butt parts being sealed by a carbon gasket (16) between them, said sintering furnace including thrusting means (8,9,10,11,12,13,18 and 19) for applying a force to end parts the muffle (15) in the direction of the longitudinal axis thereof to press the butt parts (15-1 through 15-5) together such that the force is uniformly applied over the circumferance of the muffle (15); said thrusting means (8,9,10,11,12,13,18 and 19) including means (10,11,12,13 and 18) to maintain said axial force within a set range such that even when the muffle (15) undergoes thermal expansion the axial force can be maintained within the set range.

2. The sintering furnace as claimed in Claim 1, wherein the thrusting means (8,9,10,11,12,17,18 and 19) fixes one end of the muffle (15) and presses the other end thereof by an air cylinder (9) having a stroke capable of corresponding to the whole range of change due to thermal expansion of the muffle (15), said air cylinder (9) being provided with an air feed pipe (IP) in which is inserted an air reservoir (13) having a sufficiently larger volume than the change in the inner volume of the air cylinder (9) with change of the position of the air cylinder during thermal expansion of the muffle (15).

3. The sintering furnace as claimed in Claim 1, wherein the thrusting means (8,9,10,11,12,13,18 and 19) fixes one end of the muffle (15) and presses the other end thereof by a spring (18) whose thrusting force has a stroke capable of corresponding to the whole range of change due to thermal expansion of the muffle (15) and which is so designed that the thrusting force is in a predetermined range.

4. The sintering furnace as claimed in any preceding claim, wherein the furnace (3) is a hollow zone furnace having a hollow part through which the muffle (15) penetrates, and the thrusting means (8,9,10,11,12,12,18 and 19) is arranged outside the furnace.

5. The sintering furnace as claimed in any one of Claims 1 to 3, wherein the furnace (3) is a soaking furnace in which at least one end of the muffle (15) penetrates through the heating part or furnace body, and the thrusting means (8,9,10,11,12,13,18 and 19) is arranged where the muffle (15) penetrates through the soaking furnace or at a lower temperature part of the soaking furnace.

## Patentansprüche

1. Sinterofen zur Durchführung wenigstens einer der Schritte einer Dehydrierung, Fluorzufügung und Sinterung eines Quarzvorformlings, mit einer Muffel (15) aus hochreinem Kohlenstoff, deren Innen- und/oder Außenwand mit einem gasundurchlässigen Film überzogen ist, wobei die Muffel (15) eine zylindrische Form mit einer Achse in Längsrichtung hat und in eine Vielzahl von Teilen (15-1 bis 15-5) in der Längsrichtung unterteilt ist, dadurch gekennzeichnet, daß die unterteilten Teile (15-1 bis 15-5) jeweils Stumpfstoßteile aufweisen, die am oberen und unteren Ende flach bearbeitet sind, die Stumpfstoßteile durch eine Kohlenstoffdichtung (16) zwischen diesen abgedichtet werden, wobei der besagte Sinterofen eine Druckeinrichtung (8, 9, 10, 11, 12, 13, 18 und 19) aufweist, um eine Kraft auf die Endteile der Muffel (15) in Richtung der Längsachse derselben aufzubringen, um die Stumpfstoßteile (15-1 bis 15-5) derart zusammenzudrücken, daß die Kraft gleichförmig über den Umfang der Muffel (15) angebracht wird; wobei besagte Druckeinrichtung (8, 9, 10, 11, 12, 13, 18 und 19) Einrichtungen (10, 11, 12, 13 und 18) aufweist, um besagte Axialkraft innerhalb eines vorgegebenen Bereichs derart aufrechtzuerhalten, daß selbst wenn die Muffel (15) sich thermisch aufdehnt, die Axialkraft innerhalb eines vorgegebenen Bereichs aufrechterhalten werden kann.

2. Sinterofen gemäß Anspruch 1, dadurch gekennzeichnet, daß die Druckeinrichtung (8, 9, 10, 11, 12, 17, 18 und 19) ein Ende der Muffel fixiert und das andere Ende dieser durch einen Druckluftzylinder (9) andrückt, der einen Hub hat, der in der Lage ist, dem gesamten Bereich der Veränderung aufgrund der thermischen Ausdehnung der Muffel (15) zu entsprechen, wobei besagter Druckluftzylinder (9) ein Luftzuleitungsrohr (IP) aufweist, in dem ein Luftreservoir (13) vorgesehen ist, das ein ausreichend größeres Volumen hat als die Änderung im Innenvolumen des Druckluftzylinders (9) bei einer Änderung der Position des Druckluftzylinders während der thermischen Ausdehnung der Muffel (15).

3. Sinterofen gemäß Anspruch 1, dadurch gekennzeichnet, daß die Druckeinrichtung (8, 9, 10, 11, 12, 13, 18 und 19) ein Ende der Muffel (15) fixiert und das andere Ende derselben durch eine Feder (18) andrückt, deren Druckkraft einen Hub hat, der in der Lage ist, dem ganzen Bereich der Änderung aufgrund der thermischen Ausdehnung der Muffel (15) zu entsprechen und die so ausgelegt ist, daß die Druckkraft in einem vorbestimmten Bereich liegt.

4. Sinterofen nach einem der vorangegangenen Ansprüche, dadurch gekennzeichnet, daß der Ofen (3) ein Hohlzonenofen ist, der einen hohlen Teil aufweist, durch den die Muffel (15) sich erstreckt und die Druckeinrichtung (8, 9, 10, 11, 12, 12, 18 und 19) außerhalb des Ofens angeordnet ist.

5. Sinterofen gemäß einem der Ansprüche 1 bis 3, dadurch gekennzeichnet, daß der Ofen (3) ein Tiefofen ist, bei dem wenigstens ein Ende der Muffel (15) sich durch den Heizungsteil oder das Ofengestell erstreckt und die Druckeinrichtung (8, 9, 10, 11, 12, 13, 18 und 19) dort angeordnet ist, wo die Muffel (15) den Tiefofen durchdringt oder an einem Niedertemperaturteil des Tiefofens.

## Revendications

1. Four de frittage pour effectuer au moins une des phases de déshydratation, addition de fluor et frittage d'une préforme de quartz, comprenant un moufle (15) de carbone extrêmement pur, la paroi interne et/ou externe duquel est revêtue d'un film imperméable au gaz, le moufle (15) étant de forme cylindrique avec un axe dans la direction longitudinale et divisé en une pluralité de pièces (15-1 à 15-5) dans la direction longitudinale, caractérisé en ce que les pièces divisées (15-1 à 15-5) comportent chacune des parties de jonction plates aux extrémités supérieure et inférieure, les parties de jonction étant scellées par un joint d'étanchéité en carbone (16) entre elles, ledit four de frittage comprenant des moyens de poussée (8, 9, 10, 11, 12, 13, 18 et 19) pour appliquer une force sur les parties d'extrémité du moufle (15) dans la direction de l'axe longitudinal de celui-ci afin de presser les parties de jonction (15-1 à 15-5) les unes contre les autres de manière que la force soit appliquée uniformément sur la circonférence du moufle (15); lesdits moyens de poussée (8, 9, 10, 11, 12, 13, 18 et 19) comprenant des moyens (10, 11, 12, 13 et 18) pour maintenir ladite force axiale dans une plage prédéterminée de manière que même lorsque le moufle (15) subit une dilatation thermique la force axiale puisse être maintenue dans ladite plage pré-déterminée.

2. Four de frittage selon la revendication 1, dans lequel les moyens de poussée (8, 9, 10, 11, 12, 13, 18 et 19) fixent une extrémité du moufle (15) et pressent son autre extrémité au moyen d'un cylindre à air (9) ayant une course pouvant correspondre à toute la plage de changement due à la dilatation thermique du moufle (15), ledit cylindre à air (9) étant doté d'un conduit d'alimentation en air (IP) dans lequel est inséré un réservoir d'air (13) ayant un volume suffisamment plus élevé que le changement de volume interne du cylindre à air (9) avec le changement de position du cylindre à air durant la dilatation thermique du moufle (15).

3. Four de frittage selon la revendication 1, dans lequel les moyens de poussée (8, 9, 10, 11, 12, 13, 18 et 19) fixent une extrémité du moufle (15) et pressent son autre extrémité au moyen d'un ressort (18) dont la force de poussée a une course pouvant correspondre à toute la plage de changement due à la dilatation thermique du moufle (15) et qui est conçu de manière que la force de poussée se situe dans une plage prédéterminée.

4. Four de frittage selon l'une quelconque des revendications précédentes, dans lequel le four (3) est un four à zone creuse comportant une partie creuse dans laquelle le moufle (15) pénètre, et les moyens de poussée (8, 9, 10, 11, 12, 13, 18 et 19) sont disposés à l'extérieur du four.

5. Four de frittage selon l'une quelconque des revendications 1 à 3, dans lequel le four (3) est un four de réchauffage à coeur dans lequel au moins une extrémité du moufle (15) pénètre dans la partie chauffante ou corps de four, et les moyens de poussée (8, 9, 10, 11, 1, 12, 13, 18 et 19) sont disposés à l'endroit où le moufle (15) pénètre dans le four de réchauffage à coeur ou à une partie à température moins élevée du four de réchauffage à coeur.
